# DEMANDE DE BREVET EUROPEEN

(11) **EP 1 241 675 A1**
(43) Date de publication de la demande: **18.09.2002**
(21) Numéro de dépôt: 02360081.0
(22) Date de dépôt: 08.03.2002
(51) Int. Cl.: G11B 33/04

(54) **Dispositif de boîtier pour la réception d'un support d'enregistrement**

(30) Priorité: 16.03.2001 FR 0103635
(71) Demandeur: Posso Systems Société Anonyme, 59610 Fourmies (FR)
(72) Inventeur: Ribe, Charles, 02500 Hirson (FR)
(74) Mandataire: Rhein, Alain

(57) **Abrégé**

L'invention concerne un dispositif (1) de boîtier pour la réception d'un support d'enregistrement de données numériques tel qu'un disque compact ou analogue.

Ce dispositif (1) de boîtier est caractérisé par le fait qu'il est réalisé d'une seule pièce et comporte, d'une part, un plateau (2) pour la réception dudit support d'enregistrement et, d'autre part, un capot (3) rendu solidaire, par l'intermédiaire de moyens d'articulation (13), dudit plateau (2) et, d'autre part encore, au moins une aile latérale (4), associée audit plateau (2), et comportant au moins deux orifices (25) traversant destinés à coopérer avec des organes de maintien que comporte un dispositif de rangement et/ou de classement, notamment des anneaux d'un classeur ou analogue.

## Description

La présente invention a trait à un dispositif de boîtier pour la réception d'un support d'enregistrement de données numériques tel qu'un disque compact ou analogue.

La présente invention concerne le domaine de la fabrication de dispositifs destinés à recevoir un support d'enregistrement de données numériques par exemple sous la forme d'un disque compact.

L'on connaît, d'ores et déjà, de tels dispositifs qui adoptent, par exemple, la forme d'un boîtier défini par un châssis sur lequel est monté articulé un couvercle apte à se refermer sur ledit châssis. A l'intérieur de ce dernier est enchâssée une plaque support comportant des moyens de réception d'un disque compact ou analogue.

On observera qu'un tel dispositif présente un certain nombre d'inconvénients consistant, notamment, en ce qu'un tel dispositif est constitué par différents éléments (châssis, couvercle, plaque support) nécessitant, chacun, un moule ou analogue de type spécifique pour sa réalisation. De plus, après la réalisation de ces différents éléments, il convient d'en assurer l'assemblage afin de définir un boîtier.

A ce propos, on remarquera que le fait de multiplier le nombre de moules et la nécessité de prévoir une opération d'assemblage se traduisent par un coût de revient élevé d'un tel dispositif de boîtier.

De plus, on observera que, au travers de l'assemblage de ces éléments, il convient d'assurer, d'une part, l'immobilisation de la plaque support sur le châssis et, d'autre part, un montage, de manière articulée, du couvercle sur ce châssis tout en garantissant la rigidité et la translucidité du boîtier.

Pour ce faire, un tel dispositif de boîtier est, au moins en partie, défini en un matériau du type poly-carbonate dont les inconvénients résident dans le fait qu'il présente de piètres qualités de résistance aux contraintes mécaniques, notamment à la déformation, aux chocs, aux rayures...

Un autre inconvénient de ces dispositifs de boîtier de l'état de la technique apparaît lorsque l'on souhaite archiver un tel boîtier, notamment avec des documents papier, par exemple ceux enregistrés sous forme numérique sur un disque compact logé à l'intérieur d'un tel boîtier. Une solution consiste, alors, à disposer un tel boîtier dans une pochette perforée, annexée à ces documents papier, et disposés dans un classeur. Une telle solution s'avère, en fait, peu pratique.

On remarquera, encore, que ces dispositifs de boîtier sont conçus aptes à pouvoir être facilement ouverts pour autoriser un accès aisé au disque compact qu'ils contiennent. Si une telle ouverture facilitée se conçoit pour un boîtier contenant un disque audio, il est préférable d'éviter qu'un tel boîtier s'ouvre trop facilement lorsqu'il est archivé, notamment dans un classeur, sous peine que le disque s'échappe hors de son boîtier est subisse des dégradations.

La présente invention se veut de remédier aux inconvénients des dispositifs de l'état de la technique.

A cet effet, la présente invention concerne un dispositif de boîtier pour la réception d'un support d'enregistrement de données numériques tel qu'un disque compact ou analogue, caractérisé par le fait que ledit dispositif de boîtier est réalisé d'une seule pièce et comporte, d'une part, un plateau pour la réception dudit support d'enregistrement et, d'autre part, un capot rendu solidaire, par l'intermédiaire de moyens d'articulation, dudit plateau et, d'autre part encore, au moins une aile latérale, associée audit plateau, et comportant au moins deux orifices traversant destinés à coopérer avec des organes de maintien que comporte un dispositif de rangement et/ou de classement, notamment des anneaux d'un classeur ou analogue.

Selon une caractéristique additionnelle, ledit dispositif de boîtier comporte des moyens conçus aptes à assurer un positionnement dudit support d'enregistrement par rapport audit plateau.

Une autre caractéristique consiste en ce que les moyens de positionnement sont constitués par un élément faisant saillie à la surface du plateau et étant conçu apte à s'engager, au moins en partie, dans un orifice central que comporte le support d'enregistrement, ledit élément en saillie présentant des dimensions sensiblement inférieures, voire ajustées, à celles de cet orifice central.

Une caractéristique additionnelle concerne le fait que ledit support d'enregistrement présente une zone enregistrable et que le plateau comporte des moyens conçus aptes à maintenir cette zone enregistrable à une certaine distance de la surface dudit plateau.

De tels moyens de maintien à distance sont définis par au moins un élément en relief, ménagé au niveau de la surface dudit plateau, et disposé de manière à définir, au moins en partie, une couronne annulaire présentant un diamètre et une épaisseur correspondant, sensiblement, à ceux d'une bordure annulaire non enregistrable bordant, extérieurement et en périphérie, ladite zone enregistrable dudit support d'enregistrement.

Selon une autre caractéristique additionnelle du dispositif selon l'invention, les moyens d'articulation du capot sur le plateau sont définis par une portion d'épaisseur réduite de la pièce unique définissant le dispositif de boîtier.

Selon une autre caractéristique additionnelle de l'invention, le dispositif comporte des moyens de centrage du capot sur le plateau, ceci en position refermée dudit dispositif de boîtier.

En fait, de tels moyens de centrage sont définis, d'une part et au niveau dudit capot, par un rebord périphérique définissant un premier cadre et, d'autre part et au niveau du plateau, par au moins un élément faisant saillie à la surface de ce plateau et délimitant un second cadre, ces deux cadres étant conçus aptes s'emboîter l'un dans l'autre, de préférence de manière ajustée, en position refermée du dispositif de boîtier.

Une caractéristique additionnelle concerne le fait que le rebord périphérique du capot comporte, au niveau d'au moins deux côtés opposés dudit capot, au moins une languette s'étendant à partir dudit rebord de l'un des côtés et en direction du côté opposé, ceci de manière sensiblement parallèle au plan dans lequel s'étend le capot, ces languettes étant aptes à autoriser le maintien, au niveau dudit capot, d'un support, notamment d'informations.

Selon une autre caractéristique additionnelle du dispositif, ce dernier comporte, au niveau de ladite aile latérale, des moyens aptes à assurer un verrouillage du capot sur le plateau, ceci en position refermée dudit dispositif de boîtier.

Une autre caractéristique consiste en ce que les moyens de verrouillage sont constitués par une languette élastique associée, respectivement, à ladite aile latérale ou audit plateau et s'étendant sensiblement dans le plan, respectivement à partir dudit plateau et sensiblement dans la direction, de ladite aile latérale.

Selon une autre caractéristique additionnelle de l'invention, ledit dispositif est complété par un insert escamotable destiné à coopérer, d'une part, avec ladite aile latérale et, d'autre part, avec ladite languette élastique pour une immobilisation de cette dernière dans une position de verrouillage dudit capot sur le plateau.

Une autre caractéristique consiste en ce que ledit dispositif est réalisé en un matériau translucide, voire transparent.

Une autre caractéristique consiste en ce que ledit dispositif est réalisé par moulage à partir d'un matériau synthétique ou analogue, de préférence du polyéthylène.

Les avantages de la présente invention consistent en ce que ledit dispositif de boîtier est réalisé en une seule pièce ce qui permet d'éviter toute opération d'assemblage.

De plus, le fait de réaliser ce dispositif en une seule pièce évite de faire appel à un matériau rigide mais fragile jusqu'alors indispensable pour immobiliser et/ou articuler les différents éléments d'un dispositif de boîtier de l'état de la technique.

En fait, il est avantageusement fait appel à un matériau présentant une certaine souplesse ce qui autorise la réalisation, dans la masse de ce matériau, de moyens d'articulation ainsi que d'une languette flexible de verrouillage.

Le dispositif de boîtier selon l'invention comporte, de plus, des orifices qui permettent, avantageusement, de disposer un tel dispositif à l'intérieur d'un classeur, notamment en vue de son archivage.

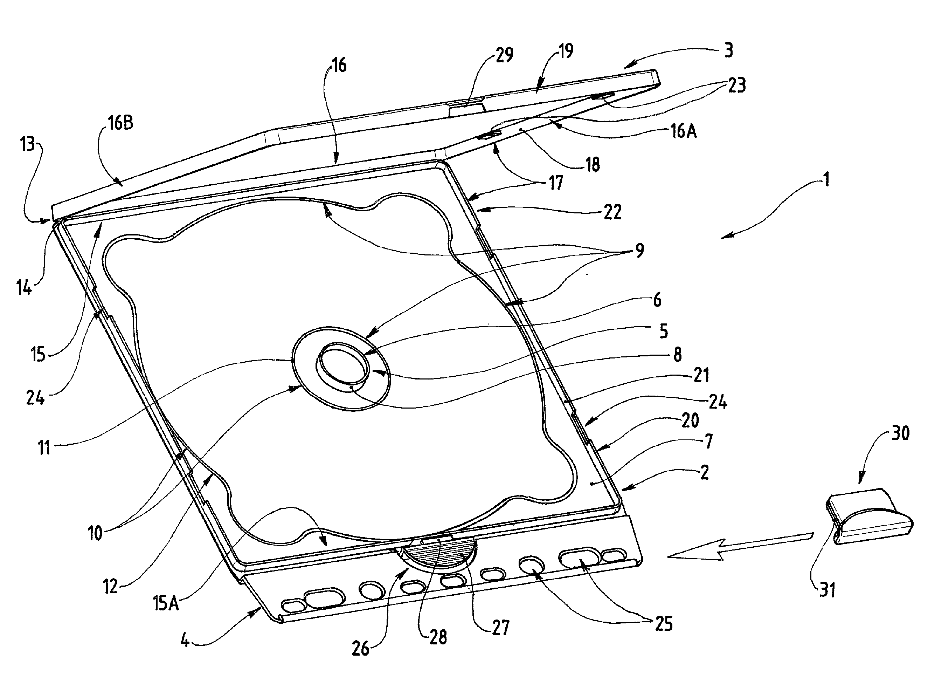

L'invention est exposée plus en détail dans la description qui va suivre se rapportant à un mode de réalisation donné à titre d'exemple et illustré dans la figure du dessin en annexe correspondant à une vue schématisée et en perspective d'un dispositif de boîtier selon l'invention.

La présente invention concerne le domaine de la fabrication de dispositifs de boîtiers destinés à recevoir un support d'enregistrement de données numériques, notamment en vue du rangement et/ou du classement d'un tel support, ce dernier se présentant, usuellement, sous la forme d'un disque compact ou analogue.

A ce propos, il convient d'observer qu'un tel disque compact présente, de manière connue en soi, deux faces dont l'une comporte une zone annulaire au niveau de laquelle peuvent être enregistrées des données numériques.

Un tel disque compact présente, en son centre, un orifice central bordé par une zone annulaire non enregistrable à partir de laquelle s'étend, de manière radiale, ladite zone annulaire enregistrable. Cette dernière est bordée, extérieurement et en périphérie, par une bordure annulaire non enregistrable délimitant le pourtour extérieur dudit disque compact.

Tel que visible sur la figure du dessin en annexe, un tel dispositif 1 de boîtier est réalisé d'une seule pièce et comporte un plateau 2, un capot 3 ainsi qu'une aile latérale 4.

Ainsi, ce dispositif 1 de boîtier comporte un plateau 2 qui présente la particularité de s'étendre dans un plan et d'adopter, sensiblement, une forme parallélépipédique, de préférence rectangulaire, voire carrée.

Un tel plateau 2 est, en fait, destiné à recevoir un support d'enregistrement (non représenté) tel qu'un disque compact décrit ci-dessus.

A ce propos, on remarquera que selon une autre caractéristique de l'invention, ce dispositif 1 de boîtier comporte des moyens 5 conçus aptes à assurer un positionnement dudit support d'enregistrement par rapport à ce plateau 2.

Tel que visible sur la figure en annexe, ce plateau 2 comporte un élément 6 faisant saillie à la surface 7 de ce plateau 2 et définissant lesdits moyens 5 de positionnement.

En fait, cet élément de positionnement 6 est conçu apte à s'engager, au moins en partie, dans l'orifice central que comporte ledit support d'enregistrement. On observera que cet élément 6 en saillie présente des dimensions sensiblement inférieures, voire ajustées, à celles de cet orifice central, ceci en vue d'assurer, selon le cas, uniquement un maintien latéral ou une immobilisation dudit support d'enregistrement sur le plateau 2.

Il convient d'observer que cet élément 6 faisant saillie peut se présenter sous différentes formes, notamment celle d'au moins un picot, d'un croisillon, d'un plot ou autre. Cependant et selon un mode de réalisation préféré de l'invention visible sur la figure en annexe, cet élément en saillie 6 adopte la forme d'une bague 8.

A ce propos, on remarquera que ces moyens de positionnement 5 sont, encore, susceptibles de constituer des moyens de centrage dudit support d'enregistrement sur le plateau 2, plus particulièrement lorsque ce dernier adopte une forme rectangulaire, voire carrée.

Selon une autre caractéristique de la présente invention, le plateau 2 comporte des moyens 9 conçus aptes à maintenir la zone enregistrable dudit support d'enregistrement à une certaine distance de la surface 7 dudit plateau 2. Une telle caractéristique permet, avantageusement, d'éviter une détérioration de cette zone enregistrable, particulièrement fragile et sensible, notamment par rayure, une telle détérioration résultant, par exemple, d'un contact de cette zone enregistrable avec la surface 7 du plateau 2 ou avec des agents agressifs, notamment des poussières ou analogue, présents au niveau de cette surface 7.

Tel que visible sur la figure en annexe, ces moyens 9 de maintien à distance sont définis par au moins un élément en relief 10 que comporte ledit plateau 2, un tel élément en relief 10 étant ménagé au niveau de la surface 7 de ce plateau 2.

Il convient d'observer que ce ou ces éléments en relief 10 peuvent être disposés, au niveau dudit plateau 2, de manière à définir, au moins en partie, un socle 11 sur lequel vient reposer la zone annulaire non enregistrable bordant l'orifice central dudit support d'enregistrement.

Tel que visible sur la figure en annexe, de tels éléments en relief 10 peuvent, encore et selon un mode de réalisation préféré, être disposés de manière à définir, au moins en partie, une couronne annulaire 12 présentant un diamètre et une épaisseur correspondant, sensiblement, à ceux de la bordure annulaire non enregistrable bordant, extérieurement et en périphérie, ladite zone enregistrable dudit support d'enregistrement.

A ce propos, il convient d'observer que de tels éléments en relief 10 peuvent adopter la forme d'au moins un picot ou, encore, d'une bague annulaire (socle 11), d'une nervure ou de portions de nervure (couronne annulaire 12) ou analogue.

Cependant et selon un autre mode de réalisation non représenté, de tels moyens de maintien 9 à distance peuvent, encore, être définis par un épaulement ou par des portions d'un épaulement de forme circulaire de diamètre sensiblement égal à celui de la bordure annulaire non enregistrable bordant, extérieurement et en périphérie, la zone enregistrable dudit support d'enregistrement.

A ce propos, il convient d'observer que les moyens de positionnement 5 ainsi que les moyens de maintien à distance 9 sont, de préférence, réalisés au cours de la fabrication dudit dispositif de boîtier 1 selon l'invention et font partie intégrante de la pièce unique définissant ce dispositif 1.

Tel qu'évoqué ci-dessus, ledit dispositif de boîtier 1 comporte, encore, un capot 3 destiné à venir se rabattre par dessus le plateau 2 en vue de réaliser la fermeture du dispositif de boîtier 1. C'est, également, ce capot 3 qui, par basculement, autorise l'ouverture dudit dispositif de boîtier 1.

Comme visible sur la figure en annexe, ce capot 3 est rendu solidaire dudit plateau 2 et est raccordé à ce dernier 2 par l'intermédiaire de moyens d'articulation 13 autorisant son basculement par rapport audit plateau 2.

En fait et selon une autre caractéristique de l'invention, ces moyens d'articulation 13 du capot 3 sur le plateau 2 sont définis par une portion 14 d'épaisseur réduite de la pièce unique définissant le dispositif 1 de boîtier.

Tel que visible sur la figure en annexe, une telle portion 14 d'épaisseur réduite s'étend entre le plateau 2 et le capot 3, ceci au niveau de l'un 15 ; 16 des côtés, respectivement, de ce plateau 2 et de ce capot 3.

A ce propos, il convient d'observer que ces moyens d'articulation 13 sont réalisés au cours de la fabrication dudit dispositif de boîtier 1 selon l'invention et font partie intégrante de la pièce unique définissant ce dispositif 1.

Selon une autre caractéristique additionnelle de l'invention, le dispositif 1 de boîtier comporte des moyens de centrage 17 du capot 3 sur le plateau 2, ceci en position refermée dudit dispositif 1.

Aussi et tel que visible sur la figure en annexe, de tels moyens de centrage 17 sont définis, d'une part, par un rebord périphérique 18 s'étendant sur une partie au moins (de préférence sur l'intégralité) du pourtour dudit capot 3. On observera que ce rebord périphérique 18 définit un premier cadre 19 équipant ledit capot 3.

Ces moyens de centrage 17 sont définis, d'autre part, par au moins un élément 20 faisant saillie par rapport à la surface 7 dudit plateau 2, ceci en périphérie ou à proximité de la périphérie de ce dernier 2. Un tel élément 20 en saillie adopte, par exemple, la forme d'un rebord, d'un picot ou analogue. Cependant et selon un mode de réalisation préféré, un tel élément en saillie 20 adopte la forme d'une nervure 21 s'étendant sur tout le pourtour dudit plateau 2.

On observera que ce ou ces éléments en saillie 20 délimitent ou définissent un second cadre 22 et que ces deux cadres 19, 22 sont conçus aptes s'emboîter l'un dans l'autre, de préférence de manière ajustée, en position refermée du dispositif de boîtier 1.

Selon une autre caractéristique du dispositif 1 de boîtier selon l'invention, le rebord périphérique 18 du capot 3 comporte, au niveau d'au moins deux côtés opposés 16A, 16B de ce capot 3, au moins une languette 23 s'étendant à partir dudit rebord 18 de l'un 16A des côtés et en direction du côté opposé 16B, ceci de manière sensiblement parallèle au plan dans lequel s'étend le capot 3.

La présence de ces languettes 23 autorise la mise en place et le maintien au niveau de ce capot 3 d'un support, notamment une jaquette imprimée, comportant, par exemple, des informations, plus particulièrement, relatives au contenu du support d'enregistrement que le dispositif 1 de boîtier est amené à recevoir.

A ce propos, il convient d'observer que les moyens de centrage 17, définis au niveau dudit plateau 2, sont conçus aptes à tenir compte de la présence de ces languettes 23 lors du rabattement du capot 3 sur la plateau 2.

Ainsi et tel que visible sur la figure en annexe, la nervure 21 de ces moyens de centrage 17 présente au moins une découpe 24 située en regard d'une telle languette 23.

Là encore, il convient d'observer que ces moyens de centrage 17 ainsi que lesdites languette 23 sont réalisés au cours de la fabrication dudit dispositif de boîtier 1 selon l'invention et font partie intégrante de la pièce unique définissant ce dispositif 1.

Selon une autre caractéristique de l'invention, ledit dispositif 1 de boîtier comporte, encore, une aile 4 venant compléter ledit plateau 2 et s'étendant, de manière latérale, à partir de ce dernier 2.

En fait, cette aile latérale 4 s'étend à partir de l'un 15A des côtés dudit plateau 2, de préférence, à partir du côté 15A situé à l'opposé de celui 15 raccordé audit capot 3 par l'intermédiaire des moyens d'articulation 13.

Tel que visible sur la figure en annexe, cette aile latérale 4 comporte au moins deux orifices traversant 25 destinés à coopérer avec des organes de maintien que comporte un dispositif de rangement et/ou de classement.

En fait, ces orifices 25 sont conçus aptes à coopérer avec des anneaux, avec une reliure, avec des éléments clipsants, des spirales ou analogue que comporte un classeur, un document relié/spiralé ou autre.

Selon une autre caractéristique de l'invention, ledit dispositif de boîtier 1 comporte, au niveau de ladite aile latérale 4, des moyens 26 aptes à assurer un verrouillage du capot 3 sur le plateau 2, ceci en position refermée dudit dispositif de boîtier.

De tels moyens de verrouillage 26 sont constitués par une languette élastique 27.

Selon un premier mode de réalisation visible sur la figure en annexe, une telle languette élastique 27 est associée audit plateau 2 et s'étendant, à partir de ce dernier 2, sensiblement dans la direction de ladite aile latérale 4.

Selon un autre mode de réalisation, une telle languette élastique 27 est associée à ladite aile latérale 4 et s'étendant sensiblement dans le plan de cette dernière 4.

Ladite languette 27 comporte un doigt d'accrochage 28 apte à coopérer avec une gâche 29 définie au niveau dudit capot 3, plus particulièrement, au niveau du rebord périphérique 18 de ce dernier 3.

A ce propos, il convient d'observer que, selon un mode de réalisation particulier, une telle languette flexible 27 est définie, au moins en partie, par une portion de ladite aile latérale 4, une telle portion étant définie notamment par une découpe, un moulage approprié ou analogue.

Là encore, il convient d'observer que ces moyens de verrouillage 26 sont réalisés au cours de la fabrication dudit dispositif de boîtier 1 selon l'invention et font partie intégrante de la pièce unique définissant ce dispositif 1.

Selon une autre caractéristique, ledit dispositif de boîtier 1 est complété par un insert escamotable 30 destiné à coopérer, d'une part, avec ladite aile latérale 4 et, d'autre part, avec ladite languette élastique 27 pour une immobilisation de cette dernière 27 dans une position de verrouillage dudit capot 3 sur le plateau 2.

En fait, un tel insert 30 adopte, sensiblement, la forme d'un cavalier 31 conçu apte à être engagé par dessus ladite aile latérale 4 et à venir s'intercaler entre ladite languette flexible 27 et ladite aile latérale 4.

Une caractéristique additionnelle de l'invention consiste en ce que ledit dispositif 1 de boîtier est réalisé en un matériau translucide, voire transparent, notamment pour autoriser une consultation des informations figurant sur un support d'informations tel qu'une jaquette ou analogue.

Un autre mode de réalisation consiste à réaliser ce dispositif de boîtier 1 en un matériau non translucide, voire au moins en partie opaque.

Il convient d'observer que le choix de ce matériau est, également, dicté par le fait qu'il convient de conférer audit dispositif 1, d'une part, une certaine rigidité et, d'autre part, une certaine souplesse, notamment en vue de définir des moyens d'articulation 13.

Aussi, ledit dispositif 1 est, de préférence, réalisé à partir d'un matériau synthétique ou analogue, de préférence du polyéthylène.

Finalement, ce dispositif 1 de boîtier est réalisé, de préférence, par moulage.

## Revendications

1. Dispositif (1) de boîtier pour la réception d'un support d'enregistrement de données numériques tel qu'un disque compact ou analogue, **caractérisé par le fait que** ledit dispositif (1) de boîtier est réalisé d'une seule pièce et comporte, d'une part, un plateau (2) pour la réception dudit support d'enregistrement et, d'autre part, un capot (3) rendu solidaire, par l'intermédiaire de moyens d'articulation (13), dudit plateau (2) et, d'autre part encore, au moins une aile latérale (4), associée audit plateau (2), et comportant au moins deux orifices (25) traversant destinés à coopérer avec des organes de maintien que comporte un dispositif de rangement et/ou de classement, notamment des anneaux d'un classeur ou analogue.

2. Dispositif (1) selon la revendication 1, **caractérisé par le fait qu'**il comporte des moyens (5) conçus aptes à assurer un positionnement dudit support d'enregistrement par rapport audit plateau (2).

3. Dispositif (1) selon la revendication 2, **caractérisé par le fait que** les moyens de positionnement (5) sont constitués par un élément (6) faisant saillie à la surface (7) du plateau (2) et étant conçu apte à s'engager, au moins en partie, dans un orifice central que comporte le support d'enregistrement, ledit élément en saillie (6) présentant des dimensions sensiblement inférieures, voire ajustées, à celles de cet orifice central.

4. Dispositif (1) selon l'une quelconque des revendications précédentes, **caractérisé par le fait que** ledit support d'enregistrement présente une zone enregistrable et que le plateau (2) comporte des moyens (9) conçus aptes à maintenir cette zone enregistrable à une certaine distance de la surface (7) dudit plateau (2).

5. Dispositif (1) selon la revendication 4, **caractérisé par le fait que** les moyens de maintien (9) à distance sont définis par au moins un élément en relief (10), ménagé au niveau de la surface (7) dudit plateau (2), et disposé de manière à définir, au moins en partie, une couronne annulaire (12) présentant un diamètre et une épaisseur correspondant, sensiblement, à ceux d'une bordure annulaire non enregistrable bordant, extérieurement et en périphérie, ladite zone enregistrable dudit support d'enregistrement.

6. Dispositif (1) selon l'une quelconque des revendications précédentes, **caractérisé par le fait que** les moyens d'articulation (13) du capot (3) sur le plateau (2) sont définis par une portion (14) d'épaisseur réduite de la pièce unique définissant le dispositif de boîtier (1).

7. Dispositif (1) selon l'une quelconque des revendications précédentes, **caractérisé par le fait qu'**il comporte des moyens de centrage (17) du capot (3) sur le plateau (2), ceci en position refermée dudit dispositif de boîtier (1).

8. Dispositif (1) selon la revendication 7, **caractérisé par le fait que** les moyens de centrage (17) sont définis, d'une part et au niveau dudit capot (3), par un rebord périphérique (18) définissant un premier cadre (19) et, d'autre part et au niveau du plateau (2), par au moins un élément (20) faisant saillie à la surface (7) de ce plateau (2) et délimitant un second cadre (22), ces deux cadres (19, 22) étant conçus aptes s'emboîter l'un dans l'autre, de préférence de manière ajustée, en position refermée du dispositif de boîtier (1).

9. Dispositif (1) selon la revendication 8, **caractérisé par le fait que** le rebord périphérique (18) du capot (3) comporte, au niveau d'au moins deux côtés opposés (16A, 16B) dudit capot (3), au moins une languette (23) s'étendant à partir dudit rebord (18) de l'un (16A) des côtés (16A, 16B) et en direction du côté opposé (16B), ceci de manière sensiblement parallèle au plan dans lequel s'étend le capot (3), ces languettes (23) étant aptes à autoriser le maintien, au niveau de ce capot (3), d'un support, notamment d'informations.

10. Dispositif (1) selon l'une quelconque des revendications précédentes, **caractérisé par le fait qu'**il comporte, au niveau de ladite aile latérale (4), des moyens (26) aptes à assurer un verrouillage du capot (3) sur le plateau (2), ceci en position refermée dudit dispositif de boîtier (1).

11. Dispositif (1) selon la revendication 10, **caractérisé par le fait que** les moyens de verrouillage (26) sont constitués par une languette élastique (27) associée, respectivement, à ladite aile latérale (4) ou audit plateau (2) et s'étendant sensiblement dans le plan, respectivement à partir dudit plateau (2) et sensiblement dans la direction, de ladite aile latérale (4).

12. Dispositif (1) selon la revendication 11, **caractérisé par le fait qu'**il est complété par un insert escamotable (30) destiné à coopérer, d'une part, avec ladite aile latérale (4) et, d'autre part, avec ladite languette élastique (27) pour une immobilisation de cette dernière (27) dans une position de verrouillage dudit capot (3) sur le plateau (2).

13. Dispositif (1) selon l'une quelconque des revendications précédentes, **caractérisé par le fait que** ledit dispositif (1) est réalisé en un matériau translucide, voire transparent.

14. Dispositif (1) selon l'une quelconque des revendications précédentes, **caractérisé par le fait que** ledit dispositif (1) est réalisé par moulage à partir d'un matériau synthétique ou analogue, de préférence du polyéthylène.
